# EUROPÄISCHE PATENTSCHRIFT

(11) **EP 3 647 272 B1**
(45) Veröffentlichungstag und Bekanntmachung des Hinweises auf die Patenterteilung: **05.01.2022**
(21) Anmeldenummer: 18204398.4
(22) Anmeldetag: 05.11.2018
(51) Int. Cl.: C02F 1/24, C02F 103/00, B03D 1/14, E02B 15/04, E02B 15/06, E02B 15/10

(54) **FLOTATIONSANLAGE ZUR REINIGUNG EINES GEWÄSSERS**
FLOTATION INSTALLATION FOR PURIFICATION OF A BODY OF WATER
INSTALLATION DE FLOTTATION DESTINÉ À NETTOYER UN MILIEU AQUATIQUE

(43) Veröffentlichungstag der Anmeldung: 06.05.2020
(73) Patentinhaber: Damann, Roland, 33106 Paderborn (DE); Damann, Volker, 33165 Lichtenau-Henglarn (DE)
(72) Erfinder: DAMANN, Roland, 33106 Paderborn (DE)
(74) Vertreter: Hauck Patentanwaltspartnerschaft mbB

(56) Entgegenhaltungen:
- WO-A1-2005/058762
- DE-A1-102010 026 168
- US-A1- 2013 292 858
- US-A1- 2015 292 174

## Beschreibung

Die Erfindung betrifft eine Flotationsanlage zur Reinigung eines Gewässers.

Flotationsanlagen werden in erster Linie zur Reinigung von Abwässern eingesetzt. Derartige Flotationsanlagen weisen eine Einrichtung zum Erzeugen von Druckwasser auf, die einen Druckbehälter umfasst, dem Wasser und ein unter erhöhtem Druck stehendes Gas zugeführt wird. In dem Druckbehälter löst sich das Gas in dem Wasser. Das Wasser mit dem darin gelösten Gas, das als Druckwasser bezeichnet wird, wird über eine Druckwasserleitung mit einem Entspannungsventil in den unteren Bereich eines Flotationsbeckens eingeleitet. Dabei ensteht eine Vielzahl von Gasblasen, die im Folgenden durch das Abwasser aufsteigen und sich an die zu entfernenden Feststoffe und/oder Tröpfchen anlagern und diese so an die Oberfläche befördern. In dem Flotationsbecken bildet sich an der Oberfläche das sogenannte Flotat, das mit einer geeigneten Fördereinrichtung entfernt werden kann. Über einen Ablauf kann dem Flotationsbecken Klarwasser entnommen werden. Die Einleitung des Druckwassers erfolgt in der Regel innerhalb des Flotationsbeckens in einer von den übrigen Bereichen des Beckens getrennten Kammer. Diese Technologie zeichnet sich durch eine hohe Effektivität bei geringem Energiebedarf aus und hat sich zur Behandlung industrieller und kommunaler Abwässer gleichermaßen bewährt.

Ebenfalls bekannt ist eine Verwendung von Flotationsanlagen zur Reinigung von Gewässern. Hierzu werden herkömmliche Flotationsanlagen am Ufer des Gewässers errichtet und das zu reinigende Wasser wird über Rohrleitungen aus dem Gewässer abgepumpt und in das Flotationsbecken der Flotationsanlage eingeleitet. Diese Vorgehensweise ist durch die erforderlichen hydraulischen Kapazitäten auf ufernahe Bereiche des Gewässers und dadurch in der Praxis auf kleinere Gewässer beschränkt. Zugleich ist die Errichtung stationärer Flotationsanlagen in vielen Fällen unwirtschaftlich. Ein Beispiel, bei dem es speziell um eine Verringerung des Phosphatgehalts eines Gewässers geht, ist aus der Patentschrift DE 44 33 634 C2 bekannt geworden.

Aus der Druckschrift DE 10 2010 026 168 A1 ist bekannt geworden, Teile einer Flotationsanlage auf einem Schiff zu errichten und eine Druckwasserleitung mit Entspannungsventilen ähnlich wie ein Schleppnetz hinter dem Schiff herzuziehen. Dass sich an der Oberfläche ansammelnde Flotat soll mit einem Förderband auf das Schiff transportiert werden. Diese bekannte Lösung ermöglicht einen mobilen Einsatz der Flotation unter Verzicht auf ein Flotationsbecken.

US 2013/0292858 A1 betrifft ein System zur Gewässerbelüftung mit einem am Grund angeordneten ersten Belüfter und einem an der Wasseroberfläche oberhalb des ersten Lüfters angeordneten zweiten Belüfter, die in Zusammenarbeit das Gewässer möglichst vollständig belüften sollen.

Davon ausgehend ist es die Aufgabe der Erfindung, eine Flotationsanlage zur Verfügung zu stellen, mit der ein Gewässer einfacher und wirksamer gereinigt werden kann.

Diese Aufgabe wird gelöst durch die Flotationsanlage mit den Merkmalen des Anspruchs 1. Vorteilhafte Ausgestaltungen sind in den Unteransprüchen angegeben.

Die Flotationsanlage dient zur Reinigung eines Gewässers und weist folgendes auf:
- eine Einrichtung zum Erzeugen von Druckwasser,
- mindestens ein Entspannungsventil,
- eine Druckwasserleitung, die die Einrichtung zum Erzeugen von Druckwasser mit dem mindestens einen Entspannungsventil verbindet,
- mindestens einen Auftriebskörper, der so dimensioniert ist, dass die Flotationsanlage an der Wasseroberfläche des Gewässers schwimmend angeordnet werden kann,
- eine Steuerung, die dazu ausgebildet ist, die Einrichtung zum Erzeugen von Druckwasser und optional das mindestens eine Entspannungsventil so zu steuern, dass eine Vielzahl von Blasen freigesetzt wird,
- eine Barriere, die einen Oberflächenbereich des Gewässers zumindest teilweise umschließt, und verhindert, dass einmal an die Oberfläche beförderte Verunreinigungen sich an der Wasseroberfläche (36) über die Barriere (32) hinaus verteilen, und
- eine Tragstruktur, an der die Barriere und das mindestens eine Entspannungsventil derart befestigt sind, dass das mindestens eine Entspannungsventil unterhalb des Oberflächenbereichs angeordnet ist,
wobei die Barriere (32) einen oberen Rand und einen unteren Rand aufweist, wobei im Betrieb der Flotationsanlage der obere Rand oberhalb der Wasseroberfläche (36) und der untere Rand unterhalb der Wasseroberfläche (36), insbesondere in einer Wassertiefe im Bereich von 5 cm bis 200 cm, angeordnet ist,
und wobei das mindestens eine Entspannungsventil sich unterhalb des durch die Barriere abgegrenzten Oberflächenbereichs befindet, so dass die in der Nähe des mindestens einen Entspannungsventils erzeugten Blasen, die langsam zur Oberfläche aufsteigen und dabei die in dem Gewässer vorhandenen Verunreinigungen mitnehmen, innerhalb des von der Barriere abgegrenzten Oberflächenbereichs ankommen.

Die Einrichtung zum Erzeugen von Druckwasser kann einen Druckbehälter mit einer Zulaufleitung für Wasser und einer Zuführleitung für Gas, insbesondere Luft, aufweisen. In der Zulaufleitung kann eine Pumpe angeordnet sein. Ein freies Ende der Zulaufleitung kann unterhalb der Wasseroberfläche des Gewässers angeordnet sein. In der Zuführleitung für das Gas kann insbesondere ein Kompressor angeordnet sein. In dem Druckbehälter werden das Wasser und das Gas miteinander vermischt. Das Gas löst sich unter erhöhtem Druck in dem Wasser, vorzugsweise bis eine Sättigung erreicht oder annähernd erreicht ist.

Als Alternative zur Verwendung einer Zuführleitung für das Gas, die in den Druckbehälter mündet, kann in der Zulaufleitung für Wasser ein Venturi-Injektor angeordnet werden, mit dem Luft aus der Umgebung angesaugt wird. In diesem Fall kommt es bereits in der Zulaufleitung zu einer Durchmischung von Wasser und Gas. Über die Druckwasserleitung kann das auf diese Weise hergestellte Druckwasser dem Druckbehälter entnommen und dem mindestens einen Entspannungsventil zugeführt werden. Das mindestens eine Entspannungsventil befindet sich vorzugsweise unterhalb der Wasseroberfläche. Es weist eine Austrittsöffnung auf, aus der das Druckwasser austritt, während sich der Druck von dem in der Druckwasserleitung vor der Öffnung des Entspannungsventils herrschenden Überdruck hin zu dem in der Umgebung der Austrittsöffnung bestehenden Umgebungsdruck abbaut. Dabei bildet sich eine Vielzahl von Blasen.

Bevorzugt können die Prozessparameter (Öffnungsquerschnitt des mindestens einen Entspannungsventils, Sättigungsgrad, Druck) so gewählt werden, dass die Blasen eine gewünschte Größenverteilung aufweisen. Möglich ist beispielsweise ein mittlerer Blasendurchmesser im Bereich von 100 µm. Vorzugsweise werden jedoch Mikroblasen verwendet. Die Flotationsanlage wird dementsprechend als Mikroflotationsanlage bezeichnet. In diesem Fall beträgt der Durchmesser eines Großteils der erzeugten Blasen zwischen 30 µm und 50 µm. Die Steuerung der Flotationsanlage kann eine elektronische Steuerung sein, die einzelne der genannten Prozessparameter überwacht und/oder steuert. Grundsätzlich kann jedoch auch eine Steuerung realisiert werden, die ohne Elektronik auskommt, beispielsweise mithilfe einfacher Drucksensoren eine Pumpe und/oder einen Kompressor der Einrichtung zum Erzeugen von Druckwasser in geeigneter Weise steuert.

Die gesamte Flotationsanlage kann an der Oberfläche des Gewässers schwimmend angeordnet werden. Zu diesem Zweck weist sie mindestens einen Auftriebskörper auf. Bevorzugt werden mehrere Auftriebskörper eingesetzt und so angeordnet, dass sie die einzelnen Elemente der Flotationsanlage in geeigneter Weise unterstützen, um eine stabile Position der Flotationsanlage an der Oberfläche zu erreichen. Dabei können einzelne Elemente der Flotationsanlage, beispielsweise die Einrichtung zum Erzeugen von Druckwasser, teilweise oder vollständig oberhalb der Oberfläche des Gewässers angeordnet sein, während sich andere Elemente, insbesondere das mindestens eine Entspannungsventil, unterhalb der Oberfläche des Gewässers befinden. Bei der Erfindung ist der mindestens eine Auftriebskörper bevorzugt ein integraler Bestandteil der Flotationsanlage, sodass keine zusätzlichen, schwimmenden Tragelemente benötigt werden, insbesondere weder ein Schiff noch ein Ponton.

Bei der Erfindung umschließt eine Barriere einen Oberflächenbereich des Gewässers zumindest teilweise. Dadurch wird dieser Oberflächenbereich des Gewässers von der umgebenden Oberfläche des Gewässers abgetrennt. Außerdem gibt es eine Tragstruktur, an der die Barriere und das mindestens eine Entspannungsventil befestigt sind. Bei der durch diese Befestigung erzielten Anordnung befindet sich das mindestens eine Entspannungsventil unterhalb des durch die Barriere abgegrenzten Oberflächenbereichs. Dies führt dazu, dass die in der Nähe des mindestens einen Entspannungsventils erzeugten Blasen, die langsam zur Oberfläche aufsteigen und dabei die in dem Gewässer vorhandenen Verunreinigungen mitnehmen, innerhalb des von der Barriere abgegrenzten Oberflächenbereichs ankommen. Das dort abgeschiedene Flotat kann dann besonders einfach aufgenommen werden. Die Barriere verhindert wirksam, dass die einmal an die Oberfläche beförderten Verunreinigungen sich an der Wasseroberfläche über die Barriere hinaus verteilen und dabei letztlich wieder in dem Gewässer landen. Dies gilt insbesondere in Anbetracht der bei natürlichen und/oder größeren Gewässern nicht zu vernachlässigenden Umgebungseinflüsse durch Wind und Wellen.

Ein weiterer Vorteil der Barriere ist, dass für eine wirksame Flotation günstige Bedingungen innerhalb der Barriere geschaffen werden. Durch die Barriere kann dabei nicht nur die Oberfläche des Gewässers in dem abgegrenzten Bereich beruhigt werden, was einer Vermischung bereits abflotierter Verunreinigungen entgegenwirken kann, sondern es tritt auch eine gewisse Beruhigung unterhalb der Wasseroberfläche ein. Das Vermeiden von Turbulenzen in diesem Bereich kann die Wirksamkeit der Flotation ebenfalls positiv beeinflussen. Dies gilt insbesondere, falls in dem Gewässer Strömungen vorhanden sind, die in Anbetracht des langsamen Aufsteigens der Blasen selbst bei geringer Geschwindigkeit schnell dazu führen können, dass sich die aufsteigenden Blasen samt der mitgenommenen Verunreinigungen so weit von der Anlage entfernen, dass die abgeschiedenen Verunreinigungen nicht mehr von einem hierfür vorgesehenen Mechanismus der Flotationsanlage aufgenommen werden können.

Die Barriere und das mindestens eine Entspannungsventil sind an einer Tragstruktur befestigt. Wahlweise können auch die Einrichtung zum Erzeugen von Druckwasser und/oder der mindestens eine Auftriebskörper an der Tragstruktur befestigt sein. Durch die Tragstruktur bildet die gesamte Flotationsanlage oder wenigstens deren relativ zu der Gewässeroberfläche zu positionierenden Elemente eine Einheit, die an der Gewässeroberfläche angeordnet werden kann, ohne dass hierfür eine Verankerung am Boden des Gewässers oder zusätzliche schwimmfähige Elemente, beispielsweise ein Schiff, benötigt werden. Der Einsatz der Flotationsanlage auf einem Gewässer ist daher besonders einfach und wirtschaftlich möglich.

Das Gewässer kann insbesondere ein natürliches Gewässer wie ein See, ein Fluss oder ein Meer sein. Mit der Reinigung des Gewässers ist gemeint, dass bestimmte Verunreinigungen aus dem Gewässer entfernt werden. Dabei kann es sich um Feststoffe und/oder Tröpfchen handeln, beispielsweise um Kunststoffpartikel oder Öltröpfchen. Es können Feststoffe und flüssige Verunreinigungen unterschiedlicher Größen erfasst werden, wobei hierfür wahlweise eine spezielle Anpassung der Größenverteilung der Blasen bzw. Mikroblasen vorgesehen sein kann. Insbesondere ist es möglich, durch geeignete Wahl der Größenverteilung gezielt bestimmte Verunreinigungen zu entfernen, beispielsweise kleine Kunststoffpartikel, während andere "Verunreinigungen" wie beispielsweise Kleinstlebewesen (Plankton) oder Algen nicht abgetrennt werden. Besonders geeignet ist die Erfindung zur Entfernung/Abtrennung von Mikroplastik, weil sich die Blasen bzw. Mikroblasen insbesondere an kleinen, hydrophoben Partikeln gut anlagern.

Im Vergleich zu herkömmlichen Verfahren zur Reinigung von Gewässern, beispielsweise mit Rechen, Sieben, Filtern oder sonstigen mechanischen Systemen, weist die Flotation viele Vorteile auf. Insbesondere kommt es nicht zu Verblockungen oder Verstopfungen wichtiger Anlagenteile, auch nicht in Verbindung mit Biofouling- und Bioscaling-Prozessen, die gerade in natürlichen Gewässern praktisch unvermeidbar sind.

Ein weiterer vorteilhafter Effekt der Anwendung einer Flotation auf Gewässer ist die mit dem Einbringen der Blasen bzw. Mikroblasen einhergehende Sauerstoffanreicherung des Gewässers. Diese tritt bereits bei Verwendung von Druckluft zur Herstellung des Druckwassers ein, kann jedoch durch Verwendung von Sauerstoff als Gas wesentlich gesteigert werden, wobei die Reinigungswirkung erhalten bleibt. Hierzu kann die Einrichtung zum Erzeugen des Druckwassers einen Sauerstofftank aufweisen.

Erfindungsgemäß weist die Barriere einen oberen Rand und einen unteren Rand auf, wobei im Betrieb der Flotationsanlage der obere Rand oberhalb der Wasseroberfläche und der untere Rand unterhalb der Wasseroberfläche, insbesondere in einer Wassertiefe im Bereich von 5 cm bis 200 cm, angeordnet ist. Die Wirkung der Barriere erfasst daher in jedem Fall einen nach oben und unten unmittelbar an die Gewässeroberfläche angrenzenden Bereich. Wird der obere Rand in einem deutlichen Abstand oberhalb der Gewässeroberfläche angeordnet, bietet dies eine zusätzliche Sicherheit gegen ein Überwinden der Barriere durch das Flotat, insbesondere unter Einfluss von Wellen. Dies gilt auch für eine weitere Erstreckung der Barriere nach unten, wobei dadurch nicht nur die Barrierewirkung für das Flotat, sondern auch die erläuterte Beruhigung des Wassers für eine wirksame Flotation unterhalb der Oberfläche von Bedeutung ist.

In einer Ausgestaltung weist die Tragstruktur einen starren Rahmen auf. Beispielsweise kann es sich um eine Stahlkonstruktion oder eine Konstruktion aus sonstigen Trägern handeln, die miteinander verbunden und/oder durch Verstrebungen gestützt sind, sodass sich eine tragfähige Struktur ergibt. Dadurch können die an der Tragstruktur befestigten Elementen der Flotationsanlage auch unter Belastung insbesondere infolge von Wellenbewegungen sicher in ihrer Position gehalten werden.

In einer Ausgestaltung, die mit jeder anderen, in diesem Text beschriebenen Ausgestaltung der Erfindung kombinierbar ist, weist die Flotationsanlage eine Plattform für eine Bedienperson auf, die an dem Rahmen befestigt und so angeordnet ist, dass die Bedienperson von der Plattform aus Zugang zu der Einrichtung zum Erzeugen von Druckwasser und/oder zu der Steuerung der Flotationsanlage hat. Eine solche Plattform erleichtert das Ausführen von Wartungsarbeiten.

In einer Ausgestaltung weist die Barriere einen langgestreckten, verformbaren Schwimmkörper und/oder mehrere, gelenkig miteinander verbundene Schwimmkörper auf, sodass die Barriere Wellenbewegungen der Gewässeroberfläche folgen kann. Grundsätzlich kann auch mit einer starren Barriere gearbeitet werden, insbesondere mit einer Barriere, die fest an einer starren Tragstruktur angeordnet ist. Eine insbesondere in ihrer Höhe verschiebliche und/oder bewegliche Barriere kann die Barrierewirkung jedoch verbessern, insbesondere wenn die Barriere insgesamt eine relativ geringe Höhe hat und nicht zu vernachlässigende Wellenbewegungen auftreten.

In einer Ausgestaltung weist die Barriere eine Saugleitung auf, die mindestens eine dem Oberflächenbereich zugewandte Saugöffnung aufweist. Die Saugleitung kann entlang der Barriere verlaufen und hierzu an der Barriere und/oder an der Tragstruktur befestigt sein. Möglich ist jedoch auch, dass die Saugleitung einen wesentlichen Bestandteil der Barriere oder die gesamte Barriere bildet. In jedem Fall ermöglicht die Saugleitung, an der Oberfläche des Gewässers in dem von der Barriere abgegrenzten Oberflächenbereich abgeschiedenes Flotat abzusaugen. Hierzu kann die Flotationsanlage zusätzlich eine Saugeinrichtung aufweisen, die mit der Saugleitung verbunden ist. Wahlweise gibt es zusätzlich einen Auffangbehälter, in dem das abgesaugte Flotat transportiert wird. Der Auffangbehälter kann ebenfalls an der Tragstruktur befestigt sein. Die Verwendung eines schwimmfähigen Auffangbehälters, der mit der Flotationsanlage verbunden und bei Bedarf einfach auswechselbar ist, ist ebenfalls möglich.

In einer Ausgestaltung ist der zumindest teilweise von der Barriere umschlossene Oberflächenbereich annähernd kreisförmig, wobei sich die Barriere entlang mindestens 60 % des Kreisumfangs erstreckt. Grundsätzlich kann der Oberflächenbereich auch eine andere Geometrie aufweisen und/oder vollständig von der Barriere umschlossen sein. Verbleibt bevorzugt an einer Seite des umschlossenen Oberflächenbereichs jedoch eine Öffnung in der Barriere, ermöglicht dies auf einfache Weise einen Zustrom von Wasser, sodass noch zu reinigendes Wasser in den Bereich gelangt, in dem die Flotation wirksam ist. Dies gilt insbesondere in Verbindung mit einer Bewegung der Flotationsanlage durch das Gewässer, wie nachfolgend noch näher erläutert.

In einer Ausgestaltung weist der zumindest teilweise von der Barriere umschlossene Oberflächenbereich eine Fläche von 100 m² oder mehr auf. Möglichst sind auch noch weit größere Anlagen mit einem umschlossenen Oberflächenbereich mit einer Fläche von beispielsweise 500 m² oder mehr oder 1.000 m² oder mehr. Dadurch können auch große Mengen von Verunreinigungen zügig entfernt werden, insbesondere bei großen Gewässern.

In einer Ausgestaltung weist die Flotationsanlage einen Antrieb auf, mit dem die Flotationsanlage in eine geradlinige Bewegung entlang der Gewässeroberfläche und/oder in eine Rotationsbewegung um eine vertikale Rotationsachse versetzt werden kann. Insbesondere ist an eine relativ langsame Bewegung gedacht, die bei einer geradlinigen Bewegung eine Geschwindigkeit von beispielsweise weniger als 1 m/s und bei einer Rotationsbewegung von beispielsweise weniger als einer Umdrehung pro Minute betragen kann. Bei einer geradlinigen Bewegung können dadurch unterschiedliche Oberflächenbereiche erfasst werden, ohne dass der Betrieb der Flotationsanlage unterbrochen werden muss. Eine (langsame) Rotationsbewegung zielt hingegen auf eine wirksame Erfassung des gesamten, abgegrenzten Oberflächenbereichs ab, insbesondere wenn das mindestens eine Entspannungsventil und die davon aufsteigenden Blasen nicht die gesamte abgegrenzte Gewässeroberfläche zugleich erfassen können. Ein weiterer Vorteil einer Rotationsbewegung ist, dass das an der Oberfläche abgeschiedene Flotat durch die Rotationsbewegung in bestimmten Oberflächenbereichen konzentriert werden kann, insbesondere in der Nähe einer Absaugöffnung. Dies gelingt insbesondere in Verbindung mit einer Räumeinrichtung, die weiter unten noch näher beschrieben wird.

In einer Ausgestaltung weist die Flotationsanlage einen GPS-Empfänger auf, der mit der Steuerung verbunden ist, wobei die Steuerung mit dem Antrieb verbunden und dazu ausgebildet ist, den Antrieb so anzusteuern, dass die Flotationsanlage sich in eine vorgegebene Position bewegt und/oder eine vorgegebene Position beibehält. Auf diese Weise kann automatisch eine bestimmte Position angefahren oder gehalten oder eine bestimmte Wegstrecke abgefahren werden. Insbesondere bei stehenden Gewässern, bei denen es kaum strömungsbedingten Austausch gibt, kann auf diese Weise ein vorgegebener Bereich des Gewässers oder das gesamte Gewässer weitgehend vollständig von der Reinigung erfasst werden.

In einer Ausgestaltung ist das mindestens eine Entspannungsventil unter der Gewässeroberfläche so angeordnet, dass das Druckwasser mit einer Geschwindigkeitskomponente in horizontaler Richtung ausströmt, um den Antrieb zu bewirken. Sofern das mindestens eine Entspannungsventil mehrere Entspannungsventile umfasst oder eines der Entspannungsventile Druckwasser in unterschiedliche Richtungen ausströmen lässt, ist damit gemeint, dass das insgesamt durch sämtliche vorhandenen bzw. sämtliche geöffneten Entspannungsventile ausströmende Druckwasser in Summe eine Geschwindigkeitskomponente in horizontaler Richtung aufweist. In diesem Fall entsteht auch dann ein Vortrieb, wenn unterschiedliche Ausströmrichtungen verwirklicht sind. Ein Ausströmen des Druckwassers mit einer Geschwindigkeitskomponente in horizontaler Richtung kann im einfachsten Fall durch eine seitliche Anordnung einer Austrittsöffnung des Entspannungsventils erzielt werden. Ebenfalls möglich ist jedoch eine bezogen auf eine vertikale Achse symmetrische Anordnung der Austrittsöffnung, beispielsweise nach oben oder nach unten gerichtet, wenn ein solches Entspannungsventil mit einer seitlich angeordneten Ablenkeinrichtung, insbesondere einem Prallblech, kombiniert wird. In diesem Fall erzeugen die auf das Prallblech auftreffenden Blasen bzw. Strömungen einen entsprechenden Vortrieb. In jedem Fall gelingt auf diese Weise ein für die angestrebten Geschwindigkeiten ausreichender Antrieb, und zwar auf besonders einfache Weise.

In einer Ausgestaltung ist die Anordnung des mindestens einen Entspannungsventils verstellbar, sodass die Richtung und/oder Größe der jeweiligen horizontalen Geschwindigkeitskomponente einstellbar ist. Einbezogen ist eine entsprechende Verstellung einer mit dem mindestens einen Entspannungsventil zusammenwirkenden Ablenkeinrichtung. Die Verstellung kann insbesondere unabhängig von einem Öffnungsgrad des Entspannungsventils vorgenommen werden. Beispielsweise kann das mindestens eine Entspannungsventil bzw. die Ablenkeinrichtung um eine vertikale Achse rotierbar und/oder um eine horizontale Achse neigbar sein. Hierfür können entsprechende Aktuatoren, die von der Steuerung der Flotationsanlage angesteuert werden, eingesetzt werden. Durch die Verstellbarkeit können die Geschwindigkeit und die Richtung der Bewegung der Flotationsanlage variiert werden.

In einer Ausgestaltung ist der Antrieb ein Propellerantrieb oder ein Wasserstrahlantrieb. Auch mithilfe eines solchen Antriebs kann für die gewünschte Bewegung der Flotationsanlage gesorgt werden.

In einer Ausgestaltung weist die Flotationsanlage eine Räumeinrichtung mit einem in dem Oberflächenbereich angeordneten Arm auf. Der Arm kann relativ zu der Barriere und/oder zu der Tragstruktur beweglich sein, um an der Oberfläche abgeschiedenes Flotat einer Absaug- oder Fördereinrichtung der Flotationsanlage zuzuführen. Dadurch kann das Flotat bei ruhender Flotationsanlage gezielt beispielsweise zu einer Absaugöffnung einer Saugeinrichtung transportiert werden. Ebenfalls möglich ist die Verwendung eines relativ zu der Barriere und/oder zu der Tragstruktur feststehenden Arms. Dieser kann beispielsweise bezogen auf eine vertikale Rotationsachse der Flotationsanlage in Radialrichtung angeordnet sein, sodass bei einer Rotationsbewegung der Flotationsanlage der Oberflächenbereich von dem Arm überstrichen und das Flotat auf diese Weise einer bevorzugt an einem radial außen gelegenen Ende des Arms, beispielsweise nahe der Barriere, angeordneten Absaugöffnung zugeführt wird.

In einer Ausgestaltung umfasst das mindestens eine Entspannungsventil in unterschiedlichen Tiefen angeordnete Entspannungsventile. Alternativ und/oder zusätzlich können einzelne Entspannungsventile in ihrer Höhe verstellbar sein, sodass jedes der Entspannungsventile in unterschiedlichen Tiefen angeordnet werden kann. In beiden Fällen ist es entweder durch entsprechende Einstellung der Tiefe bestimmter Entspannungsventile oder durch gezielte Ansteuerung feststehender Entspannungsventile, die sich in einer bestimmten Tiefe befinden, möglich, die Blasen in einer bestimmten Wassertiefe freizusetzen. Dadurch können gezielt Verunreinigungen erfasst werden, die sich in ebendieser Tiefe und oberhalb davon befinden.

In einer Ausgestaltung weist die Flotationsanlage ein Kamerasystem auf, das dazu ausgebildet ist, ein Bild des Oberflächenbereichs zu erfassen und an eine externe Empfangseinrichtung zu übertragen. Anhand der übertragenen Bilder ist eine visuelle Kontrolle des Flotationsergebnisses aus der Ferne möglich. Dabei können die Bilder von einer Person oder mithilfe einer automatischen, computergestützten Bildauswertung ausgewertet werden. Weicht das Flotationsergebnis von einer Erwartung ab, können Gegenmaßnahmen eingeleitet werden, entweder durch Eingriffe in die Steuerung der Anlage aus der Ferne oder eine Wartung/Inspektion der Anlage vor Ort.

In einer Ausgestaltung weist die Flotationsanlage zur Energieversorgung der Einrichtung zur Erzeugung von Druckwasser und/oder einer Absaugeinrichtung eine Photovoltaikanlage, eine Windenergieanlage und/oder einen Generator mit Verbrennungsmotor auf. Wahlweise kann von der jeweiligen Energieerzeugungsanlage auch ein Antrieb der Flotationsanlage versorgt werden. Wie eingangs erwähnt, ist der Energiebedarf einer Flotationsanlage verglichen mit anderen Reinigungsanlagen relativ gering, sodass eine vollständige Energieversorgung aus den genannten Quellen relativ einfach möglich ist.

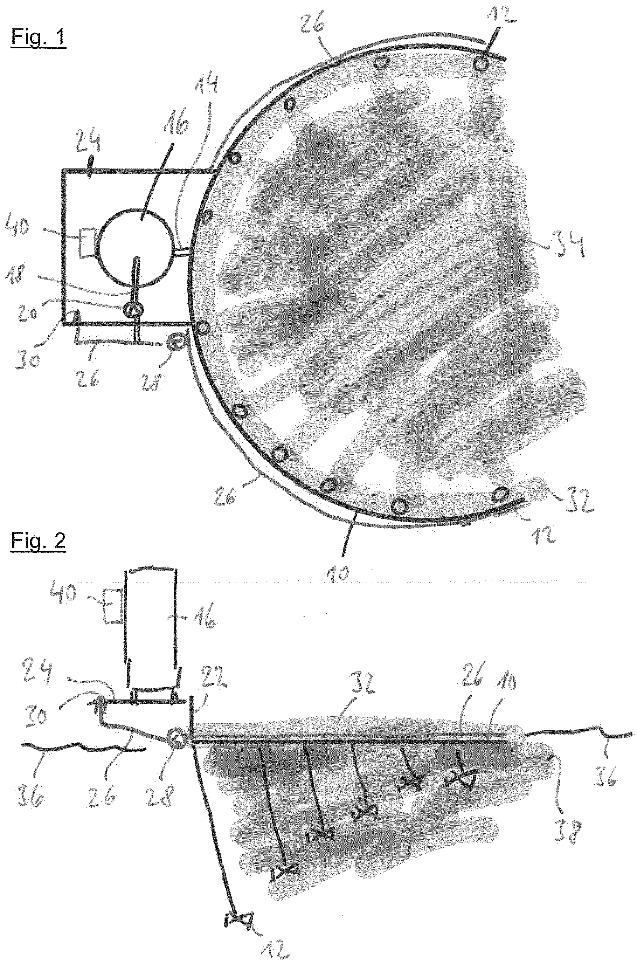

Nachfolgend wird die Erfindung anhand eines in zwei Figuren dargestellten Ausführungsbeispiels näher erläutert. Es zeigen:
- Figur 1: eine Flotationsanlage in einer Ansicht von oben in einer schematischen Darstellung,
- Figur 2: die Flotationsanlage aus Figur 1 in einer Ansicht von der Seite, ebenfalls in einer schematischen Darstellung.
Die Flotationsanlage aus Figur 1 weist eine Tragstruktur mit einem starren Rahmen 10 auf, an dem mehrere Entspannungsventile 12 angeordnet sind. Der Rahmen 10 ist entlang des Umfangs eines Kreises angeordnet und erstreckt sich über etwa 60 % des Kreisumfangs. Entlang des Rahmens 10 verläuft eine nicht überall im Einzelnen dargestellte Druckwasserleitung 14, die mit jedem der Entspannungsventile 12 verbunden ist.

Die Druckwasserleitung 14 ist mit einem Druckbehälter 16 verbunden, mit dem Druckwasser hergestellt wird. Hierzu führt eine Zuführleitung 18, in der eine Pumpe 20 angeordnet ist, dem Druckbehälter 16 Wasser zu, das dem Gewässer entnommen wird. Weiterhin wird dem Druckbehälter 16 mithilfe eines Kompressors Druckluft zugeführt, was nicht dargestellt ist.

Die Tragstruktur umfasst außerdem einen von dem Rahmen 10 nach oben weisenden Abschnitt 22, an dem eine Plattform 24 befestigt ist, auf der die Einrichtung zum Erzeugen von Druckwasser mit dem Druckwasserbehälter 16 angeordnet ist und die außerdem hinreichend Platz für eine Bedienperson bietet. Auf der Plattform 24 befindet sich eine in der Zeichnung nur angedeutete Steuerung 40, die die Einrichtung zum Erzeugen von Druckwasser so steuert, dass eine Vielzahl von Blasen, insbesondere Mikroblasen, freigesetzt wird.

Durch eine breite Linie angedeutet ist eine Barriere 32, die ebenfalls an dem Rahmen 10 befestigt ist und dem kreisförmigen Verlauf des Rahmens 10 folgt. Sie grenzt einen Oberflächenbereich 34 des Gewässers von der Umgebung ab.

Ebenfalls entlang des Rahmens 10 verläuft eine Saugleitung 26, die mehrere nicht dargestellte Saugöffnungen aufweist, die dem Oberflächenbereich 34 zugewandt sind. In der Saugleitung 26 ist eine Saugpumpe 28 angeordnet, mit der Flotat durch die Saugleitung 26 abgesaugt werden kann. Ein freies Ende der Saugleitung 30 ist im Bereich der Plattform 24 angeordnet, wo ein Auffangbehälter platziert werden kann.

In der Figur 2 erkennt man in der Seitenansicht, dass die Barriere 32 einen oberen Rand und einen unteren Rand aufweist, die oberhalb bzw. unterhalb der Wasseroberfläche 36 angeordnet sind. Weiterhin erkennt man, dass die Entspannungsventile 12 in unterschiedlichen Tiefen angeordnet sind und so, dass sie sich unterhalb des Oberflächenbereiches 34 befinden. Schließlich deutet Figur 2 eine Flotatschicht 38 an, die sich innerhalb des Oberflächenbereichs 34 an der Wasseroberfläche ausgebildet hat.

### Liste der Bezugszeichen:

- 10: Rahmen
- 12: Entspannungsventil
- 14: Druckwasserleitung
- 16: Druckbehälter
- 18: Zuführleitung
- 20: Pumpe
- 22: Tragstrukturabschnitt
- 24: Plattform
- 26: Saugleitung
- 28: Pumpe
- 30: freies Ende der Saugleitung
- 32: Barriere
- 34: Oberflächenbereich
- 36: Wasseroberfläche
- 38: Flotatschicht
- 40: Steuerung

## Patentansprüche

1. Flotationsanlage zur Reinigung eines Gewässers mit
• einer Einrichtung zum Erzeugen von Druckwasser,
• mindestens einem Entspannungsventil (12),
• einer Druckwasserleitung (14), die die Einrichtung zum Erzeugen von Druckwasser mit dem mindestens einen Entspannungsventil (12) verbindet,
• mindestens einem Auftriebskörper, der so dimensioniert ist, dass die Flotationsanlage an der Wasseroberfläche (36) des Gewässers schwimmend angeordnet werden kann, und
• einer Steuerung (40), die dazu ausgebildet ist, die Einrichtung zum Erzeugen von Druckwasser und optional das mindestens eine Entspannungsventil (12) so zu steuern, dass eine Vielzahl von Blasen freigesetzt wird, **gekennzeichnet durch**
• eine Barriere (32), die einen Oberflächenbereich (34) des Gewässers zumindest teilweise umschließt und verhindert, dass einmal an die Oberfläche beförderte Verunreinigungen sich an der Wasseroberfläche (36) über die Barriere (32) hinaus verteilen, und
• eine Tragstruktur, an der die Barriere (32) und das mindestens eine Entspannungsventil (12) derart befestigt sind, dass das mindestens eine Entspannungsventil (12) unterhalb des Oberflächenbereichs (34) angeordnet ist,
• wobei die Barriere (32) einen oberen Rand und einen unteren Rand aufweist, wobei im Betrieb der Flotationsanlage der obere Rand oberhalb der Wasseroberfläche (36) und der untere Rand unterhalb der Wasseroberfläche (36), insbesondere in einer Wassertiefe im Bereich von 5 cm bis 200 cm, angeordnet ist, und
• wobei das mindestens eine Entspannungsventil (12) sich unterhalb des durch die Barriere (32) abgegrenzten Oberflächenbereichs (34) befindet, so dass die in der Nähe des mindestens einen Entspannungsventils (12) erzeugten Blasen, die langsam zur Oberfläche aufsteigen und dabei die in dem Gewässer vorhandenen Verunreinigungen mitnehmen, innerhalb des von der Barriere (32) abgegrenzten Oberflächenbereichs (34) ankommen.

2. Flotationsanlage nach Anspruch 1, **dadurch gekennzeichnet, dass** die Tragstruktur einen starren Rahmen (10) aufweist.

3. Flotationsanlage nach einem der Ansprüche 1 bis 2, **dadurch gekennzeichnet, dass** die Barriere (32) einen langgestreckten, verformbaren Schwimmkörper und/oder mehrere, gelenkig miteinander verbundene Schwimmkörper aufweist, so dass die Barriere (32) Wellenbewegungen der Wasseroberfläche (36) folgen kann.

4. Flotationsanlage nach einem der Ansprüche 1 bis 3, **dadurch gekennzeichnet, dass** die Barriere (32) eine Saugleitung (26) aufweist, die mindestens eine dem Oberflächenbereich (34) zugewandte Saugöffnung aufweist.

5. Flotationsanlage nach einem der Ansprüche 1 bis 4, **dadurch gekennzeichnet, dass** der zumindest teilweise von der Barriere (32) umschlossene Oberflächenbereich (34) annähernd kreisförmig ist, wobei sich die Barriere (32) entlang mindestens 60 % des Kreisumfangs erstreckt, und/oder dadurch, dass der zumindest teilweise von der Barriere (32) umschlossene Oberflächenbereich (34) eine Fläche von 100 m² oder mehr aufweist.

6. Flotationsanlage nach einem der Ansprüche 1 bis 5, **dadurch gekennzeichnet, dass** die Flotationsanlage einen Antrieb aufweist, mit dem die Flotationsanlage in eine geradlinige Bewegung entlang der Wasseroberfläche (36) und/oder in eine Rotationsbewegung um eine vertikale Rotationsachse versetzt werden kann.

7. Flotationsanlage nach Anspruch 6, **dadurch gekennzeichnet, dass** die Flotationsanlage einen GPS-Empfänger aufweist, der mit der Steuerung verbunden ist, wobei die Steuerung mit dem Antrieb verbunden und dazu ausgebildet ist, den Antrieb so anzusteuern, dass die Flotationsanlage sich in eine vorgegebene Position bewegt und/oder eine vorgegebene Position beibehält.

8. Flotationsanlage nach Anspruch 6 oder 7, **dadurch gekennzeichnet, dass** das mindestens eine Entspannungsventil (12) unter der Wasseroberfläche (36) so angeordnet ist, dass das Druckwasser mit einer Geschwindigkeitskomponente in horizontaler Richtung ausströmt, um den Antrieb zu bewirken.

9. Flotationsanlage nach Anspruch 8, **dadurch gekennzeichnet, dass** die Anordnung des mindestens einen Entspannungsventils (12) verstellbar ist, so dass die Richtung und/oder Größe der jeweiligen horizontalen Geschwindigkeitskomponente einstellbar ist.

10. Flotationsanlage nach Anspruch 6 oder 7, **dadurch gekennzeichnet, dass** der Antrieb ein Propellerantrieb oder ein Wasserstrahlantrieb ist.

11. Flotationsanlage nach einem der Ansprüche 1 bis 10, **dadurch gekennzeichnet, dass** die Flotationsanlage eine Räumeinrichtung mit einem in dem Oberflächenbereich (34) angeordneten Arm aufweist.

12. Flotationsanlage nach einem der Ansprüche 1 bis 11, **dadurch gekennzeichnet, dass** das mindestens eine Entspannungsventil (12) in unterschiedlichen Tiefen angeordnete Entspannungsventile (12) umfasst.

13. Flotationsanlage nach einem der Ansprüche 1 bis 12, **dadurch gekennzeichnet, dass** die Flotationsanlage ein Kamerasystem aufweist, das dazu ausgebildet ist, ein Bild des Oberflächenbereichs zu erfassen und an eine externe Empfangseinrichtung zu übertragen.

14. Flotationsanlage nach einem der Ansprüche 1 bis 13, **dadurch gekennzeichnet, dass** die Flotationseinrichtung zur Energieversorgung der Einrichtung zur Erzeugung von Druckwasser und/oder der Steuerung (40) und/oder einer Absaugeinrichtung eine Photovoltaikanlage, eine Windenergieanlage und/oder einen Generator mit Verbrennungsmotor aufweist.

## Claims

1. A flotation installation for purification of a body of water, comprising
• an apparatus for generating pressurized water,
• at least one relief valve (12),
• a pressurized water line (14), which connects the apparatus for generating pressurized water to the at least one relief valve (12),
• at least one buoyancy body, which is dimensioned such that the flotation installation can be arranged so as to float on the water surface (36) of the body of water, and
• a controller (40), which is designed to control the apparatus for generating pressurized water and optionally the at least one relief valve (12) such that several bubbles are released, **characterized by**
• a barrier (32), which at least partially encloses a surface region (34) of the body of water and prevents contaminants conveyed to the surface at one time from spreading on the water surface (36) beyond the barrier (32), and
• a support structure, to which the barrier (32) and the at least one relief valve (12) are fastened such that the at least one relief valve (12) is arranged below the surface region (34),
• wherein the barrier (32) comprises an upper edge and a lower edge, wherein, during operation of the flotation installation, the upper edge is arranged above the water surface (36) and the lower edge is arranged below the water surface (36), in particular at a water depth in the range of 5 cm to 200 cm, and
• wherein the at least one relief valve (12) is located below the surface region (34) delimited by the barrier (32), such that the bubbles that are generated in the vicinity of the at least one relief valve (12) and that ascend slowly to the surface and take with them the contaminants present in the body of water arrive within the surface region (34) delimited by the barrier (32).

2. The flotation installation according to claim 1, **characterized in that** the support structure comprises a rigid frame (10).

3. The flotation installation according to any one of claims 1 to 2, **characterized in that** the barrier (32) comprises an elongate, deformable floating body and/or multiple floating bodies interconnected in an articulated manner, such that the barrier (32) can follow wave movements of the water surface (36).

4. The flotation installation according to any one of claims 1 to 3, **characterized in that** the barrier (32) comprises a suction line (26), which comprises at least one suction opening facing the surface region (34).

5. The flotation installation according to any one of claims 1 to 4, **characterized in that** the surface region (34) at least partially enclosed by the barrier (32) is approximately circular, wherein the barrier (32) extends along at least 60% of the circumference, and/or **in that** the surface region (34) at least partially enclosed by the barrier (32) has an area of 100 m² or more.

6. The flotation installation according to any one of claims 1 to 5, **characterized in that** the flotation installation comprises a drive, by means of which the flotation installation can be displaced in a straight-line movement along the water surface (36) and/or in a rotational movement about a vertical axis of rotation.

7. The flotation installation according to claim 6, **characterized in that** the flotation installation comprises a GPS receiver, which is connected to the controller, wherein the controller is connected to the drive and is designed to actuate the drive such that the flotation installation moves into a predefined position and/or maintains a predefined position.

8. The flotation installation according to claim 6 or 7, **characterized in that** the at least one relief valve (12) is arranged under the water surface (36) such that the pressurized water flows out in a horizontal direction with a velocity component so as to produce the driving.

9. The flotation installation according to claim 8, **characterized in that** the arrangement of the at least one relief valve (12) is adjustable such that the direction and/or magnitude of the relevant horizontal velocity component can be adjusted.

10. The flotation installation according to claim 6 or 7, **characterized in that** the drive is a propeller drive or a water jet drive.

11. The flotation installation according to any one of claims 1 to 10, **characterized in that** the flotation installation comprises a clearing apparatus having an arm arranged in the surface region (34).

12. The flotation installation according to any one of claims 1 to 11, **characterized in that** the at least one relief valve (12) comprises relief valves (12) arranged at different depths.

13. The flotation installation according to any one of claims 1 to 12, **characterized in that** the flotation installation comprises a camera system, which is designed to capture an image of the surface region and to transmit same to an external receiving apparatus.

14. The flotation installation according to any one of claims 1 to 13, **characterized in that** the flotation apparatus comprises a photovoltaic system, a wind turbine and/or a generator with a combustion engine for supplying power to the apparatus for generating pressurized water and/or to the controller (40) and/or to a suction apparatus.

## Revendications

1. Installation de flottation destinée à nettoyer un milieu aquatique, comprenant
• un système de production d'eau sous pression,
• au moins une soupape de détente (12),
• une conduite d'eau sous pression (14), laquelle relie le système de production d'eau sous pression à l'au moins une soupape de détente (12),
• au moins un flotteur, lequel est dimensionné de telle façon que l'installation de flottation peut être disposée de manière flottante sur la surface d'eau (36) du milieu aquatique, et
• un dispositif de commande (40), lequel est conçu pour commander le système de production d'eau sous pression et optionnellement l'au moins une soupape de détente (12) de manière à libérer une pluralité de bulles, **caractérisée par**
• une barrière (32), laquelle entoure au moins partiellement une région de surface (34) du milieu aquatique et empêche des impuretés une fois transportées vers la surface de se disperser au-delà de la barrière (32) sur la surface d'eau (36), et
• une structure de support, à laquelle la barrière (32) et l'au moins une soupape de détente (12) sont fixées de telle façon que l'au moins une soupape de détente (12) est disposée sous la région de surface (34),
• dans laquelle la barrière (32) présente un bord supérieur et un bord inférieur, le bord supérieur étant disposé au-dessus de la surface d'eau (36) et le bord inférieur étant disposé sous la surface d'eau (36), en particulier à une profondeur d'eau de 5 cm à 200 cm, pendant le fonctionnement de l'installation de flottation, et
• dans laquelle l'au moins une soupape de détente (12) se trouve sous la région de surface (34) délimitée par la barrière (32), de sorte que les bulles produites à proximité de l'au moins une soupape de détente (12), lesquelles remontent lentement vers la surface et emportent ainsi les impuretés présentes dans le milieu aquatique, arrivent dans la région de surface (34) délimitée par la barrière (32).

2. Installation de flottation selon la revendication 1, **caractérisée en ce que** la structure de support présente un cadre rigide (10).

3. Installation de flottation selon l'une des revendications 1 à 2, **caractérisée en ce que** la barrière (32) présente un flotteur allongé déformable et/ou plusieurs flotteurs reliés entre eux de façon articulée, de sorte que la barrière (32) peut suivre le mouvement des vagues de la surface d'eau (36).

4. Installation de flottation selon l'une des revendications 1 à 3, **caractérisée en ce que** la barrière (32) présente une conduite d'aspiration (26), laquelle présente au moins une ouverture d'aspiration tournée vers la région de surface (34).

5. Installation de flottation selon l'une des revendications 1 à 4, **caractérisée en ce que** la région de surface (34) au moins partiellement entourée par la barrière (32) est approximativement circulaire, la barrière (32) s'étendant le long d'au moins 60% de la circonférence, et/ou **en ce que** la région de surface (34) au moins partiellement entourée par la barrière (32) présente une superficie de 100 m² ou plus.

6. Installation de flottation selon l'une des revendications 1 à 5, **caractérisée en ce que** l'installation de flottation présente un entraînement, avec lequel l'installation de flottation peut être déplacée selon un mouvement rectiligne le long de la surface d'eau (36) et/ou selon un mouvement de rotation autour d'un axe de rotation vertical.

7. Installation de flottation selon la revendication 6, **caractérisée en ce que** l'installation de flottation présente un récepteur GPS, lequel est relié au dispositif de commande, le dispositif de commande étant relié à un entraînement et conçu pour actionner l'entraînement de manière à ce que l'installation de flottation se déplace vers une position prédéfinie et/ou maintienne une position prédéfinie.

8. Installation de flottation selon la revendication 6 ou 7, **caractérisée en ce que** l'au moins une soupape de détente (12) est disposée de telle façon sous la surface d'eau (36) que l'eau sous pression s'écoule avec une composante de vitesse dans une direction horizontale, afin d'engendrer l'entraînement.

9. Installation de flottation selon la revendication 8, **caractérisée en ce que** la disposition de l'au moins une soupape de détente (12) est ajustable, de sorte que la direction et/ou la taille de la composante de vitesse horizontale respective est ajustable.

10. Installation de flottation selon la revendication 6 ou 7, **caractérisée en ce que** l'entraînement est un entraînement à hélice ou un entraînement à jet d'eau.

11. Installation de flottation selon l'une des revendications 1 à 10, **caractérisée en ce que** l'installation de flottation présente un système de dragage avec un bras disposé dans la région de surface (34).

12. Installation de flottation selon l'une des revendications 1 à 11, **caractérisée en ce que** l'au moins une soupape de détente (12) comporte des soupapes de détente (12) disposées à différentes profondeurs.

13. Installation de flottation selon l'une des revendications 1 à 12, **caractérisée en ce que** l'installation de flottation présente un système de caméra, lequel est conçu pour détecter une image de la région de surface et pour transmettre celle-ci à un système de réception externe.

14. Installation de flottation selon l'une des revendications 1 à 13, **caractérisée en ce que** le système de flottation présente une installation photovoltaïque, une éolienne et/ou un générateur avec un moteur à combustion, pour l'alimentation en énergie du système de production d'eau sous pression et/ou du dispositif de commande (40) et/ou d'un système d'aspiration.
